(19) Europäisches Patentamt / European Patent Office / Office européen des brevets

(11) **EP 2 822 788 B1**

(12) **FASCICULE DE BREVET EUROPEEN**

(45) Date de publication et mention de la délivrance du brevet:
**02.11.2016  Bulletin 2016/44**

(51) Int Cl.:
**B60H 1/00** *(2006.01)*          **B60H 1/32** *(2006.01)*
**F25B 47/02** *(2006.01)*

(21) Numéro de dépôt: **12790565.1**

(22) Date de dépôt: **26.11.2012**

(86) Numéro de dépôt international:
**PCT/EP2012/073558**

(87) Numéro de publication internationale:
**WO 2013/131589 (12.09.2013 Gazette 2013/37)**

(54) **PROCEDE DE COMMANDE AUTOMATIQUE DESTINE AU DEGIVRAGE D'UNE POMPE A CHALEUR POUR VEHICULE**

**AUTOMATISCHES STEUERUNGSVERFAHREN ZUR ENTEISUNG EINER WÄRMEPUMPE FÜR EIN FAHRZEUG**

**AUTOMATIC CONTROL METHOD USED FOR DEFROSTING A HEAT PUMP FOR A VEHICLE**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**14.01.2015   Bulletin 2015/03**

(73) Titulaire: **Renault S.A.S.**
**92100 Boulogne-Billancourt (FR)**

(72) Inventeurs:
• **QUETANT, Eudes**
  **78280 Guyancourt (FR)**
• **GOUTAL, Virginie**
  **78720 La Celle les Bordes (FR)**
• **PASQUINI, Myriam**
  **78000 Versailles (FR)**

(56) Documents cités:
FR-A1- 2 958 019          US-A- 5 971 845
US-A1- 2004 134 207

## Description

### Domaine technique

La présente invention se rapporte au domaine des systèmes de pompe à chaleur équipant certains types de véhicules automobiles, notamment les véhicules électriques ou hybrides. Elle concerne plus particulièrement un procédé de commande du système de pompe à chaleur de ces véhicules, ledit procédé étant destiné à dégivrer certains composants dudit système lorsque la température de l'air extérieur est basse.

### Etat de la technique

Il est connu d'employer une pompe à chaleur dans les véhicules pour chauffer et/ou climatiser l'habitacle du véhicule. Cette pompe à chaleur est réversible pour fonctionner à la fois en mode chauffage et en mode climatisation. Elle comprend classiquement un compresseur pour chauffer et comprimer un fluide frigorigène, un échangeur de chaleur interne formant condenseur en mode chauffage pour chauffer l'air intérieur de l'habitacle du véhicule par échange de calories avec le fluide frigorigène issu du compresseur, un détendeur pour refroidir le fluide frigorigène issu de l'échangeur de chaleur interne et enfin un échangeur de chaleur externe formant évaporateur en mode chauffage pour chauffer le liquide frigorigène issu du détendeur par échange de calories avec un air extérieur. La pompe à chaleur comprend également classiquement un accumulateur intercalé entre l'échangeur de chaleur externe et le compresseur notamment pour stocker le fluide frigorigène avant compression par le compresseur et également garantir un retour d'huile vers le compresseur.

En mode chauffage, lorsque la température extérieure est voisine de 0°C ou est négative, et lorsque l'air est relativement humide, du givre peut se former sur les parois extérieures de l'échangeur de chaleur externe. La quantité de givre formée est fonction de plusieurs paramètres, notamment du degré d'hygrométrie de l'air extérieur et de la différence de température entre le fluide frigorigène circulant dans l'échangeur et l'air extérieur. Ce givrage de l'échangeur externe entraine alors une diminution du rendement de la pompe de chaleur, ce qui augmente la consommation électrique à iso performance, ou diminue la performance à iso consommation électrique. Cela diminue aussi la puissance maximale du système.

Pour enlever ce givre, il est connu de disposer une résistance électrique à proximité de l'échangeur pour réchauffer l'air extérieur rentrant dans l'échangeur afin de dégivrer les parois externes de celui-ci. Cette solution n'est pas satisfaisante car elle augmente la consommation électrique globale du système, ce qui est préjudiciable dans le cas de véhicules électriques ou hybrides.

Une autre solution connue décrite dans le document brevet JP-A-10-166846 consiste à alimenter directement l'échangeur de chaleur externe avec du le fluide frigorigène comprimé par le compresseur. Le détendeur et l'échangeur de chaleur interne ne sont plus présents dans la boucle de circulation du fluide frigorigène. L'échangeur de chaleur externe est alors parcouru par du fluide frigorigène chauffé par le compresseur. L'échangeur de chaleur externe fonctionne alors en condenseur de manière à faire fondre au moins partiellement le givre présent sur ses parois.

Toutes ces solutions ont été conçues pour permettre un dégivrage complet de l'échangeur de chaleur externe. Or, d'autres pièces de la pompe à chaleur givrent, notamment les tuyaux à basse pression ainsi que l'accumulateur, ce qui nuit aux performances de la pompe à chaleur et, de par l'accumulation successive de givre sur les parois de ces éléments et la proximité des autres éléments situés dans son environnement proche, risque de provoquer du bruit et un éventuel dommage conséquent. En mode chauffage, l'accumulateur est parmi les points les plus froids de la pompe à chaleur, car situé en zone de basse pression et d'aspiration du compresseur. Il en est de même pour les tuyaux et flexibles reliant la sortie de l'échangeur externe à l'entrée du compresseur. Du givre se forme donc également sur les parois de ces éléments lorsque la température extérieure est basse. Par ailleurs, durant le dégivrage de l'échangeur externe, la température du fluide alimentant l'accumulateur a déjà bien baissé car ledit fluide a déjà libéré une grande partie de ses calories dans l'échangeur externe pour faire fondre le givre présent sur les parois de celui-ci. Un dégivrage complet de l'échangeur externe n'entraine donc pas nécessairement un dégivrage complet de l'accumulateur, surtout si le dégivrage de l'échangeur a été optimisé en temps et en puissance (régime moteur du compresseur) pour réduire au maximum la consommation électrique du système. Cette présence de givre sur l'accumulateur a non seulement pour inconvénient de diminuer les performances de la pompe à chaleur en maintenant le fluide contenu dans l'accumulateur à une température basse, mais également d'augmenter la proximité de l'échangeur avec d'autres pièces du véhicule, ce qui a pour conséquence d'augmenter les risques de chocs avec ces autres pièces, d'augmenter les risques de bruit lié à ces chocs et d'augmenter les risques de dégradation de l'accumulateur et de ces pièces.

Description de l'invention

Un but de l'invention est de pallier tout ou partie des inconvénients précités de l'art antérieur.

Un autre but de l'invention est de procéder à un dégivrage plus complet de la pompe à chaleur, tout en impactant le moins possible sur les autres modes de fonctionnement du système de pompe à chaleur.

Un autre but de l'invention est d'impacter le moins possible la consommation électrique du système.

Selon l'invention, il est proposé de procéder non seulement au dégivrage de l'échangeur externe mais également au dégivrage de l'accumulateur si un givrage de ce dernier est détecté.

L'invention a pour objet un procédé de commande d'un système de pompe à chaleur, notamment pour véhicule automobile, ledit système comprenant un compresseur pour chauffer et comprimer un fluide frigorigène, un échangeur de chaleur interne formant condenseur en mode chauffage pour chauffer un air intérieur par échange avec le fluide frigorigène issu du compresseur, un détendeur pour refroidir le fluide frigorigène et un échangeur de chaleur externe formant évaporateur en mode chauffage pour chauffer le liquide frigorigène issu du détendeur par échange avec un air extérieur, un accumulateur étant en outre intercalé entre l'échangeur de chaleur externe et le compresseur pour stocker le fluide frigorigène avant compression, le procédé étant caractérisé en ce qu'il comporte les étapes suivantes:

a) pendant le mode chauffage, détection du givrage de l'échangeur de chaleur externe,
b) détermination d'une donnée représentative de la durée du givrage de l'échangeur de chaleur,
c) si la durée du givrage de l'échangeur de chaleur externe est supérieure ou égale à une première durée maximale prédéterminée, émission d'un ordre de dégivrage de l'échangeur, et
d) si un ordre de dégivrage de l'échangeur est émis, déclenchement d'une opération de dégivrage de l'échangeur de chaleur externe et, selon un critère prédéfini, déclenchement d'une opération de dégivrage de l'accumulateur par circulation d'un fluide comprimé par le compresseur dans ledit échangeur externe et ledit accumulateur.

Ainsi, selon l'invention, on détecte le givrage de l'échangeur externe et on déclenche ensuite une opération de dégivrage de l'échangeur de chaleur externe ou une opération de dégivrage de l'accumulateur selon un critère prédéfini.

Selon un mode de réalisation particulier, le critère prédéfini consiste à déclencher une fois sur n, n étant un entier supérieur ou égal à 2, une opération de dégivrage de l'accumulateur si un ordre de dégivrage de l'échangeur est émis et à déclencher les fois restantes une opération de dégivrage de l'échangeur de chaleur externe.

En effet, un dégivrage complet de l'échangeur externe optimisé en temps et consommation ne permet pas un dégivrage complet de l'accumulateur. Or l'épaisseur du givre sur celui-ci peut augmenter suivant les conditions extérieures et de roulage. A un certain point, il devient nécessaire de le dégivrer car l'épaisseur associée augmente sa proximité avec d'autres pièces du véhicule (risque de bruit et de dégradation) et diminue sa performance. Il est donc intéressant de repérer le givrage associé à ces deux éléments pour effectuer l'opération de dégivrage adéquate.

Selon un autre mode de réalisation, l'étape a) du procédé comporte en outre une étape de détection du givrage de l'accumulateur, l'étape b) comprend en outre une étape de détermination d'une donnée représentative de la durée du givrage de l'accumulateur, et l'étape c) comprend en outre l'émission d'un ordre de dégivrage de l'accumulateur si la durée du givrage de l'accumulateur de chaleur externe est supérieure ou égale à une deuxième durée maximale prédéterminée. Le critère prédéfini consiste alors à déclencher une opération de dégivrage de l'accumulateur si un ordre de dégivrage de l'accumulateur est émis et à déclencher une opération de dégivrage de l'échangeur de chaleur externe si un ordre de dégivrage de l'échangeur est émis.

Ainsi, on déclenche l'opération de dégivrage adéquate pour ne consommer de l'énergie et du temps de dégivrage uniquement lorsque cela est nécessaire.

Selon un mode de réalisation particulier, l'opération de dégivrage de l'échangeur externe ou de l'accumulateur comprend une étape de mise en marche du compresseur à un premier régime moteur prédéterminé pour faire circuler du fluide frigorigène chaud dans l'échangeur de chaleur externe et l'accumulateur pendant une durée inférieure ou égale à une troisième durée maximale prédéterminée $C_3$, ledit régime moteur et ladite troisième durée maximale étant fonction de ladite opération de dégivrage. La circulation de ce fluide frigorigène chaud permet de faire fondre le givre présent sur les parois externes de l'échangeur externe et, le cas échéant, le givre présent sur les parois externes de l'accumulateur.

Selon un mode de réalisation particulier, le système comprend en outre un groupe moto-ventilateur à proximité de l'échangeur de chaleur externe et l'opération de dégivrage de l'échangeur externe ou de l'accumulateur comprend en outre, si la température de l'air extérieur est supérieure à une première valeur de température prédéterminée, une étape de mise en marche du groupe moto-ventilateur pendant une durée inférieure ou égale à une quatrième durée maximale afin de produire un flux d'air destiné à évacuer l'eau encore présente sur les parois externes dudit échangeur de chaleur externe après la fonte du givre. Pendant cette étape, le compresseur reste en fonctionnement.

Selon un mode de réalisation particulier, un givrage de l'échangeur de chaleur externe est détecté lorsque à la fois la température de l'air extérieur est inférieure à une deuxième valeur de température prédéterminée et la différence de température entre la température de l'air extérieur et la température du fluide frigorigène à la sortie de l'échangeur de chaleur externe est supérieure à une troisième valeur de température prédéterminée. Ladite troisième valeur de température est avantageusement fonction de la température de l'air extérieur.

Selon un mode de réalisation particulier, le givrage de l'accumulateur est détecté lorsqu'à la fois le régime moteur du compresseur est supérieur à une deuxième valeur de régime moteur prédéterminée, la température de l'air extérieur est inférieure à une quatrième valeur de température prédéterminée et la différence de température entre la température de l'air extérieur et la température du fluide frigorigène à la sortie de l'échangeur de chaleur externe est supérieure à une cinquième valeur de température prédéterminée. Ladite cinquième valeur de température est avantageusement fonction de la température de l'air extérieur.

Les valeurs de température prédéterminées peuvent différer suivant le type et le profil de mission du système de pompe à chaleur

Selon un mode de réalisation particulier, pendant l'étape b), on incrémente un premier compteur lorsque le givrage de l'échangeur de chaleur externe est détecté et on incrémente un deuxième compteur lorsque le givrage de l'accumulateur est détecté. La valeur de comptage de ces deux compteurs va permettre de déterminer la durée du givrage de l'échangeur et de l'accumulateur.

Avantageusement, lesdits premier et deuxième compteurs sont remis à zéro lorsque la température de l'air extérieur est supérieure ou égale à une sixième valeur de température positive prédéterminée. Ainsi, si par exemple le véhicule est stationné un certain temps à température extérieure faiblement positive, cet air extérieur va naturellement échanger avec le givre et le faire fondre. On peut considérer dans ce cas qu'une opération de dégivrage n'est plus nécessaire. Les compteurs sont donc remis à zéro.

Par ailleurs, pendant l'étape c), on émet un ordre de dégivrage de l'échangeur externe lorsque la valeur de comptage du premier compteur est supérieure ou égale à une première valeur de comptage représentative de ladite première durée maximale et un ordre de dégivrage de l'accumulateur lorsque la valeur de comptage du deuxième compteur est supérieure ou égale à une deuxième valeur de comptage représentative de ladite deuxième durée maximale.

Avantageusement, une opération de dégivrage de l'échangeur externe ou de l'accumulateur n'est lancée que si la vitesse du véhicule est inférieure ou égale à une valeur de vitesse prédéterminée inférieure à 30 km/h. En effet, on peut considérer, qu'au-delà de cette valeur, il est inutile de lancer une opération de dégivrage car, même si l'échangeur externe ou l'accumulateur est traversé par un fluide chaud, l'air froid traversant l'échangeur externe maintiendra le givre présent.

Avantageusement, l'opération de dégivrage est stoppée dès qu'un autre besoin de la boucle du système autre que le dégivrage et prioritaire par rapport à celui-ci survient. Ce besoin peut être par exemple un besoin de chauffage ou de climatisation le confort habitacle.

L'opération de dégivrage est réalisée même si la vitesse du véhicule est supérieure à ladite valeur de vitesse prédéterminée. Le système comprend alors un volet piloté pour empêcher l'air dynamique de traverser l'échangeur externe pendant l'opération de dégivrage.

Selon un mode de réalisation particulier, l'étape de mise en marche du compresseur à un premier régime moteur pendant une durée inférieure ou égale à une troisième durée maximale comprend les étapes suivantes :

- mise en marche du compresseur audit premier régime moteur, et
- incrémentation d'un troisième compteur tant que la température du fluide frigorigène à la sortie de l'échangeur de chaleur externe est inférieure ou égale à une septième valeur prédéterminée de température et que la valeur de comptage du troisième compteur est inférieure à une troisième valeur prédéterminée de comptage représentative d'une cinquième durée maximale inférieure à ladite troisième durée maximale et tant que la température extérieure est inférieure ou égale à une huitième température prédéterminée;
- arrêt dudit compresseur lorsque l'incrémentation du troisième compteur est arrêtée.

Selon un mode de réalisation particulier, l'étape de mise en marche du groupe moto-ventilateur pendant une durée inférieure ou égale à une quatrième durée maximale comprend les étapes suivantes:

- mise en marche du groupe moto-ventilateur lorsque la température de l'air extérieur est supérieure ou égale à ladite première valeur de température prédéterminée, et
- incrémentation d'un quatrième compteur tant que la température du fluide à la sortie de l'échangeur de chaleur externe est supérieure ou égale à une neuvième valeur de température prédéterminée et que la valeur de comptage du quatrième compteur est inférieure à une quatrième valeur prédéterminée de comptage représentative de ladite quatrième durée maximale,
- arrêt du groupe moto-ventilateur lorsque l'incrémentation du quatrième compteur est arrêtée.

Avantageusement, le compresseur est mis en marche pendant la mise en marche du groupe-moto-ventilateur pour optimiser l'évacuation de l'eau pendant la phase de soufflage.

Avantageusement, pendant l'incrémentation du quatrième compteur, le compresseur fonctionne à un troisième régime inférieur ou égal audit premier régime moteur. En effet, il s'agit juste de faire circuler dans la boucle un fluide frigorigène ayant une température empêchant l'eau issue de la fonte du givre de regeler afin de pouvoir l'évacuer par soufflage.

Avantageusement, le pas d'incrémentation ou la vitesse d'incrémentation des premier et/ou deuxième compteurs est fonction de la température extérieure afin de mieux évaluer la quantité et l'intensité de givre présent sur l'échangeur externe et/ou sur l'accumulateur.

Avantageusement, le pas d'incrémentation ou la vitesse d'incrémentation des premier et/ou deuxième compteurs est également fonction de la différence de température entre la température de l'air extérieur et la température du fluide frigorigène à la sortie de l'échangeur de chaleur externe afin de mieux évaluer la quantité et l'intensité de givre présent sur l'échangeur externe et/ou sur l'accumulateur.

Selon un autre mode de réalisation, il est également prévu de commander une opération de dégivrage de l'échangeur externe ou de l'accumulateur par une commande utilisateur, par exemple lorsque celui-ci veut s'assurer que la pompe à chaleur est dégivrée.

Avantageusement, l'état des compteurs est lu par un outil externe de diagnostic afin de vérifier l'état de givrage des composants de la pompe à chaleur.

D'autres avantages pourront encore apparaître à l'homme du métier à la lecture des exemples ci-dessous, illustrés par les figures annexées, donnés à titre illustratif.

Brève description des figures

- La figure 1 est une vue schématique d'un système de chauffage/climatisation apte à mettre en oeuvre le procédé de l'invention ;
- La figure 2 est un schéma illustrant le fonctionnement du système de la figure 1 en mode chauffage,
- La figure 3 est un schéma illustrant le fonctionnement du système de la figure 1 en mode climatisation,
- La figure 4 est un schéma illustrant le fonctionnement du système de la figure 1 en mode dégivrage,
- La figure 5 est un organigramme représentant les étapes principales d'un premier mode de réalisation du procédé de l'invention,
- La figure 6 est un organigramme représentant les sous-étapes de l'opération de dégivrage de la figure 5; et
- La figure 7 est un organigramme représentant les étapes principales d'un deuxième mode de réalisation du procédé de l'invention, et
- La figure 8 est un organigramme représentant les étapes principales d'un troisième mode de réalisation du procédé de l'invention.

**Description détaillée d'au moins un mode de réalisation**

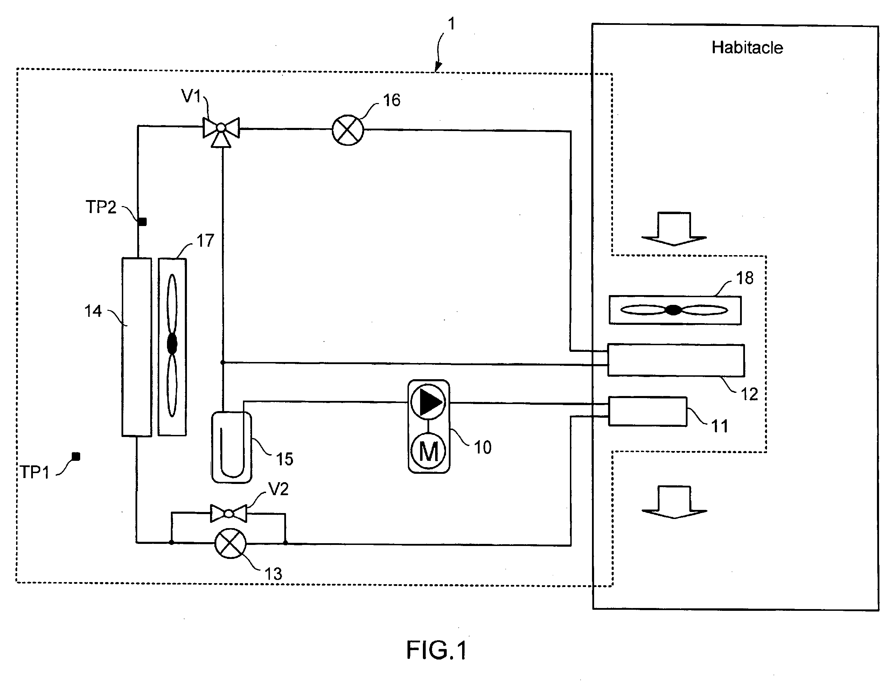

La figure 1 illustre un système de pompe à chaleur 1 apte à mettre en oeuvre le procédé de l'invention. Ce système comporte un compresseur 10, un échangeur de chaleur interne 11 formant condenseur interne en mode chauffage, un autre échangeur de chaleur interne 12 formant évaporateur interne en mode climatisation, un détendeur 13 pour le mode chauffage, un échangeur de chaleur externe 14 formant évaporateur en mode chauffage, un détendeur 16 pour le mode climatisation, ainsi qu'un accumulateur 15. Ces différents composants sont parcourus par un fluide frigorigène. Des vannes V1 et V2 sont par ailleurs prévues pour modifier le parcours d'un fluide frigorigène à travers ces différents composants selon l'un des modes de fonctionnement suivants du système :

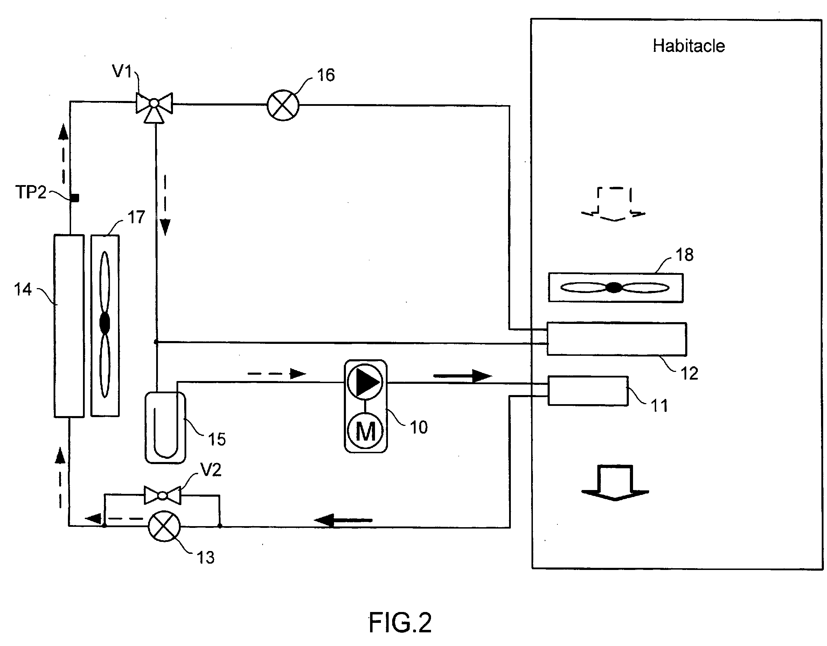

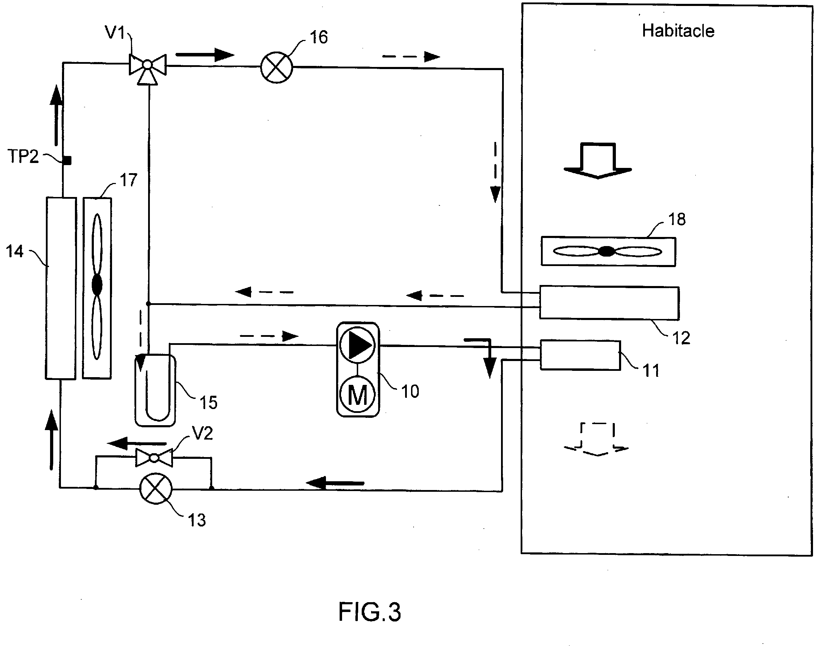

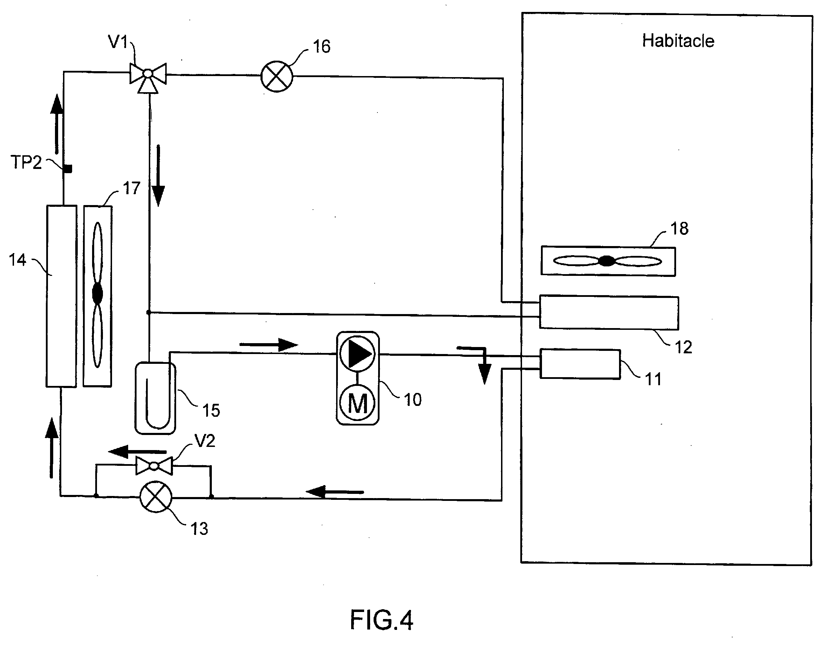

- en mode chauffage, le système réchauffe l'air intérieur de l'habitacle du véhicule ; ce mode de fonctionnement est illustré par la figure 2 ;
- en mode climatisation, le système refroidit l'air intérieur de l'habitacle du véhicule ; ce mode de fonctionnement est illustré par la figure 3 ; et
- en mode dégivrage, le système dégivre les parois externes de l'échangeur de chaleur externe 14 et/ou de l'accumulateur 15 ; ce mode de fonctionnement est illustré par la figure 4.

La vanne V1 est une vanne trois voies comprenant une entrée couplée à la sortie de l'échangeur de chaleur externe 14, une première sortie couplée à l'entrée du compresseur 10 via l'accumulateur et une deuxième sortie couplée à une entrée du détendeur 16. La vanne V2 est une vanne deux voies destinée à contourner le détendeur 13 en mode dégivrage et en mode climatisation.

Le système comprend en outre un capteur de température extérieure TP1 situé dans une zone extérieure à l'habitacle du véhicule permettant de capter une température représentative de la température extérieure, par exemple sous un rétroviseur du véhicule, et un capteur de température TP2 pour mesurer la température du fluide frigorigène à la sortie de l'échangeur 14. Enfin des groupes moto-ventilateurs 17 et 18 sont prévus pour diffuser de l'air respectivement à travers l'échangeur externe 14 et à travers les échangeurs internes 11 et 12 et augmenter les échanges de calories pendant les différents modes de fonctionnement du système.

Comme indiqué ci-dessus, la boucle de circulation du fluide frigorigène du système change selon le mode de fonctionnement employé.

En mode chauffage illustré par la figure 2, la vanne V1 est commandée pour coupler la sortie de l'échangeur 14 à l'entrée du compresseur 10 via l'accumulateur 15. Le compresseur 10 chauffe et comprime le fluide frigorigène provenant de l'échangeur de chaleur externe 14 formant alors un évaporateur. Le fluide ainsi comprimé est ensuite fourni à l'échangeur 11 (condenseur) qui est chargé de chauffer l'air intérieur de l'habitacle par échange de calories avec le fluide frigorigène sortant du compresseur. Le fluide frigorigène est ensuite refroidi et détendu par le détendeur 13 puis fourni de nouveau à l'échangeur externe 14. Pendant ce mode de fonctionnement, la vanne V2 est fermée et n'est donc pas traversée par le fluide frigorigène. Par ailleurs, les groupes moto-ventilateurs 17 et 18 sont en marche suivant le besoin du système. Par exemple, à haute vitesse du véhicule, il est inutile de mettre en marche le groupe moto-ventilateur 17 de la face avant du véhicule. Le déplacement du fluide dans le système est matérialisé par des flèches. Les flèches en trait plein matérialisent un déplacement de fluide à haute pression (fluide comprimé) et les flèches en traits pointillés matérialisent un déplacement de fluide à basse pression (fluide détendu).

En mode climatisation illustré par la figure 3, la vanne V1 est commandée pour coupler la sortie de l'échangeur 14 à l'entrée du détendeur 16. Ce dernier est chargé de détendre et de refroidir le fluide frigorigène provenant de l'échangeur de chaleur externe 14 formant condenseur dans ce mode de fonctionnement. Le fluide frigorigène détendu circule à travers l'évaporateur 12 pour refroidir l'air intérieur de l'habitacle par échange de calories avec le fluide frigorigène. Le fluide frigorigène circule ensuite à travers l'accumulateur 15 puis le compresseur 10. Celui-ci réchauffe et comprime le fluide frigorigène qui traverse ensuite la vanne V2 puis l'échangeur externe 14. Une vanne V3 non représentée sur les figures permet avantageusement de contourner l'échangeur 11 pour éviter tout transfert de chaleur du fluide frigorigène vers l'intérieur de l'habitacle via l'échangeur 11. En l'absence de vanne V3, on prévoit un volet de mixage, non représenté sur la figure, pour que le flux d'air issu de l'évaporateur 12 contourne l'échangeur 11 de façon à maintenir la performance de climatisation) Pendant ce mode, les groupes moto-ventilateurs 17 et 18 sont en marche suivant le besoin du système. Par exemple, à haute vitesse du véhicule, il n'est pas nécessaire de mettre en marche le groupe moto-ventilateur 17 de la face avant. Pour des vitesses plus faibles, le groupe moto-ventilateur 17 doit être mis en marche pour assurer une condensation efficace et limiter la pression du fluide.

En mode dégivrage illustré par la figure 4, le fluide frigorigène ne passe par aucun élément de détente forcée (détendeur ou orifice tube) du système. La vanne V1 est commandée pour coupler la sortie de l'échangeur 14 à l'entrée du compresseur 10 via l'accumulateur 15. Le compresseur 10 chauffe et comprime faiblement le fluide frigorigène. Le fluide comprimé traverse ensuite la vanne V2 puis l'échangeur externe 14. L'échangeur externe 14 et l'accumulateur 15 sont traversés par du fluide chaud qui permet de faire fondre petit à petit le givre présent sur leurs parois externes. Pendant ce mode, le groupe moto-ventilateur 17 est éventuellement en marche en fin de dégivrage comme cela sera décrit plus loin.

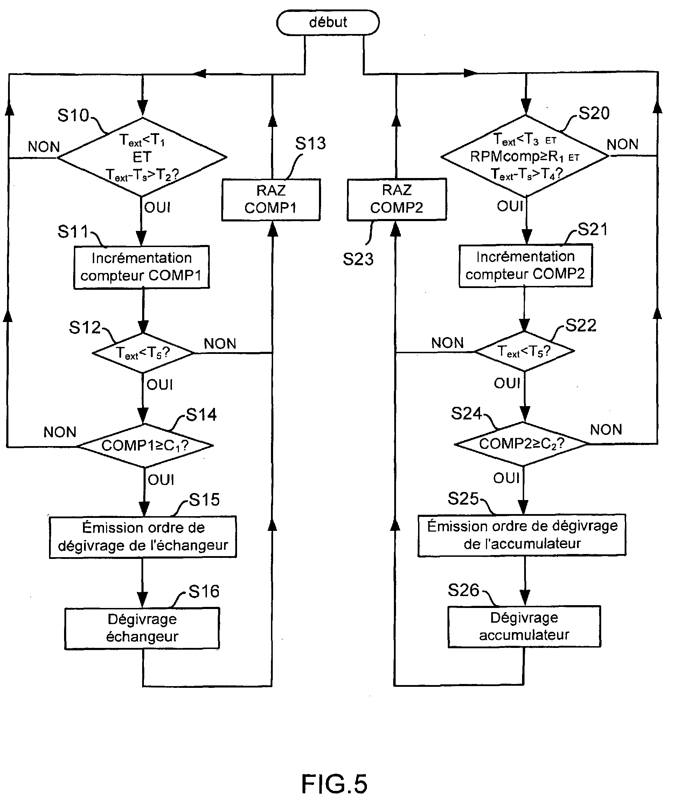

On va maintenant décrire plus en détail la commande de dégivrage du système. Cette commande est automatique et ne nécessite aucune action ou intervention de l'utilisateur du véhicule. Elle est décrite en référence aux figures 5, 6 et 7. Dans ces figures, $T_{ext}$ désigne la température de l'air extérieur mesurée par le capteur de température TP1, $T_s$ désigne la température du fluide frigorigène à la sortie de l'échangeur externe 14 mesurée par la capteur de température TP2 et $RPM_{Comp}$ désigne le nombre de rotations par minute du moteur du compresseur 10.

Le givre se forme sur les parois externes de l'échangeur externe 14 et de l'accumulateur 15 lorsque la température extérieure est négative ou proche de zéro et que le système fonctionne en mode chauffage. La détection de givre est donc opérée pendant le mode de chauffage du système. Après détection, les opérations de dégivrage sont réalisées lorsque le système n'est plus en mode chauffage et de préférence lorsque le véhicule est à l'arrêt.

En référence à la figure 5, le procédé de l'invention comprend un ensemble d'étapes S10 à S16 pour la détection de givrage de l'échangeur externe 14 et son dégivrage et un ensemble d'étapes S20 à S26 pour la détection de givrage de l'accumulateur 15 et son dégivrage. Ces deux ensembles d'étapes sont exécutés en parallèle.

On va tout d'abord décrire les étapes se rapportant à la détection de givrage et au dégivrage de l'échangeur externe. Le procédé de l'invention comporte tout d'abord une étape S10 de détection du givrage de l'échangeur externe 14. Pendant cette étape, on détecte que l'échangeur externe 14 est en condition de givrage lorsque :

■

$$T_{ext} < T_1,$$

et
■

$$T_{ext} - T_s > T_2;$$

où $T_1$ est une température proche de 0°C et $T_2$ est une température positive.

$T_1$ est par exemple égale à 5°C et $T_2$ est par exemple égale à 10°C. Dans cet exemple, cela signifie que $T_s$ est alors au moins inférieure à -5°C. Ces valeurs correspondent à une situation connue de givrage de l'échangeur. et peuvent être déterminées par des essais avec par exemple une vérification visuelle d'apparition de givre.

Selon un mode de réalisation avantageux, la valeur $T_2$ varie en fonction de la température extérieure $T_{ext}$. La valeur $T_2$ diminue à mesure que la température extérieure $T_{ext}$ diminue.

Le procédé comporte ensuite une étape de détermination de la durée givrage de l'échangeur externe 14. Cette détermination est réalisée en incrémentant un compteur COMP1 tant que l'échangeur externe est en condition de givrage ($T_{ext} < T_1$ et $T_{ext} - T_s > T_2$) à une étape S11. La valeur de comptage du compteur est représentative de la durée de givrage de l'échangeur externe.

Selon un mode de réalisation particulier, l'incrémentation du compteur COMP1 est fonction de la température extérieure. On incrémente par exemple plus rapidement le compteur COMP1 si la température extérieure $T_{ext}$ est très basse. Par exemple, si $T_{ext} < -10°C$, le compteur est incrémenté de 2 toutes les secondes et si $T_{ext} \geq -10°C$, le compteur est incrémenté de 1 toutes les secondes. La valeur de comptage du compteur COMP1 est alors représentative non seulement de la durée de givrage mais aussi de l'intensité du givrage. Il y aura plus de givre si la température extérieure $T_{ext}$ est proche de 0°C.

En variante, l'incrémentation du compteur COMP1 est fonction de la différence $T_{ext}-T_s$. Plus cette différence est élevée, plus on incrémente rapidement le compteur. Par exemple, si $T_{ext} - T_s > 15°C$, le compteur est incrémenté de 2 toutes les secondes et si $T_{ext} - T_s \leq 15°C$, le compteur est incrémenté de 1 toutes les secondes. Dans ce cas, la valeur de comptage du compteur COMP1 est également représentative de l'intensité du givrage.

Si les conditions précitées pour le givrage de l'échangeur externe ne sont plus présentes, le compteur n'est pas nécessairement remis à zéro. Par exemple, si la température extérieure $T_{ext}$ reste basse mais que l'écart $T_{ext}-T_s$ diminue, le givre reste présent sur l'échangeur externe. Aussi, le compteur COMP1 n'est remis à zéro que si la température $T_{ext}$ est supérieure ou égale à une valeur de température $T_5$ supérieure à la température $T_1$. $T_5$ est par exemple égale à 8°C. Cette remise à zéro du compteur COMP1 est illustrée par les étapes S12 et S13. L'étape S12 est une étape de comparaison de la température $T_{ext}$ avec la valeur prédéfinie $T_5$. Si, $T_{ext} \geq T_5$, on remet à zéro le compteur COMP1 à l'étape S13. Si $T_{ext} < T_5$, on passe à l'étape suivante Ainsi, la valeur de comptage du compteur COMP1 peut survivre à l'arrêt du véhicule ou à son endormissement.

Avantageusement, le compteur COMP1 est remis à zéro également lorsque le système est activé en mode climatisation pendant une durée minimale. En effet, dans ce mode de fonctionnement, l'échangeur externe fonctionne en tant que condenseur, ce qui a pour effet de fournir des calories aux parois de l'échangeur externe et de faire fondre l'éventuel givre présent sur les parois de l'échangeur.

L'étape suivante S14 est une étape de comparaison. On compare la valeur du compteur COMP1 à une valeur de comptage $C_1$ prédéterminée. La valeur de comptage $C_1$ correspond par exemple à une durée $D_1$ lorsque le compteur COMP1 est incrémenté tous les secondes. La durée $D_1$ est par exemple égale à 5 minutes. Par souci de simplification, COMP1 désigne à la fois le compteur COMP1 et sa valeur de comptage.

Si $COMP1 \geq C_1$, on émet un ordre de dégivrage de l'échangeur à l'étape S15. Sinon on poursuit le comptage.

Un ordre de dégivrage de l'échangeur externe est donc émis lorsque les conditions de givrage de celui-ci sont présentes pendant une durée $D_1$.

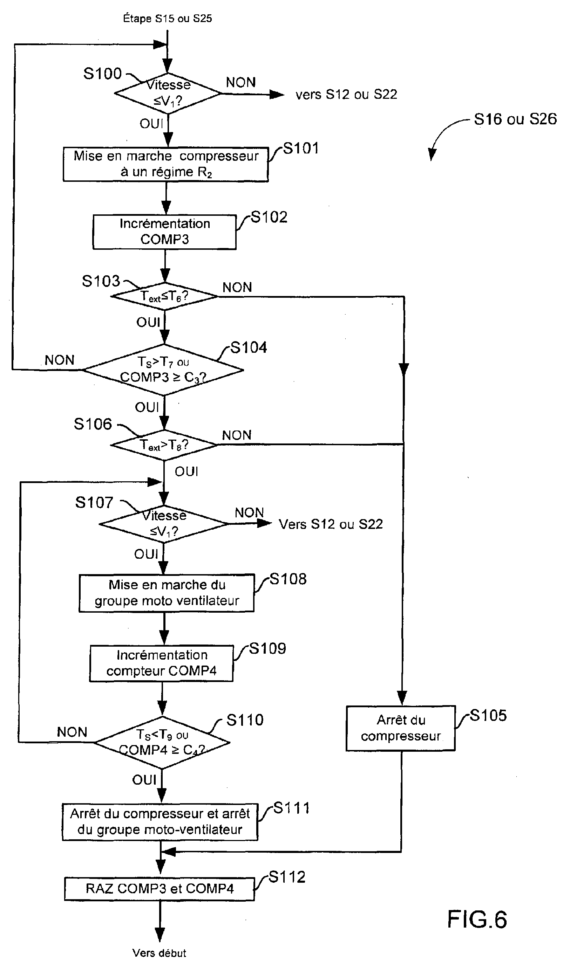

L'opération de dégivrage est ensuite réalisée à l'étape S16. La circulation du fluide frigorigène pendant cette étape correspond à ce qui a été décrit en référence à la figure 4. Cette étape sera décrite plus loin en référence à la figure 6.

Après dégivrage de l'échangeur, le compteur COMP1 est remis à zéro retournant à étape S13.

Pour la détection de givrage et le dégivrage de l'accumulateur 15, on effectue en parallèle des étapes sensiblement identiques aux étapes S10 à S16, référencées S20 à S26 sur la figure 5.

A l'étape S20, la détection de givrage de l'accumulateur 15 consiste à détecter si les conditions suivantes sont présentes:

$$T_{ext} < T_3;$$

et

$$T_{ext} - T_s > T_4,$$

et

$$RPM_{Comp} \geq R_1$$

où $T_3$ est une température proche de 0°C, $T_4$ est une température positive et $R_1$ est une valeur de régime moteur du compresseur 10. $T_3$ est par exemple égale à 6°C et $T_4$ est par exemple égale à 10°C (raisonnement identique à la valeur choisie pour la détection du givrage de l'échangeur externe). on peut aussi avoir $T_1=T_3$ et $T_2=T_4$. Par ailleurs, $R_1$ est par exemple égal à 500 rpm (rotations par minute) afin d'incrémenter le compteur uniquement pendant les phases de circulation de fluide où le givrage est le plus fort.

Selon un mode de réalisation avantageux, la valeur $T_4$ varie en fonction de la température extérieure $T_{ext}$.

On détermine ensuite à une étape S21 la durée givrage de l'accumulateur 15. Pendant cette étape, on incrémente un compteur COMP2 tant que les conditions de givrage de l'accumulateur 15 sont présentes ($T_{ext} < T_3$ et $T_{ext}-T_s > T_4$ et $RPM_{comp} \geq R_1$).

Comme pour l'étape S11, selon un mode de réalisation particulier, l'incrémentation du compteur COMP2 est fonction de la température extérieure. On incrémente plus ou moins rapidement le compteur COMP2 selon que la température extérieure est plus ou moins basse.

Comme pour le compteur COMP1, le compteur COMP2 est remis à zéro si la température $T_{ext}$ est supérieure ou égale à la valeur de température $T_5$. Le procédé comprend donc une étape S22 de comparaison de la température $T_{ext}$ avec la valeur prédéfinie $T_5$ et, si $T_{ext} \geq T_5$, on remet à zéro le compteur COMP2 à l'étape S23. Si $T_{ext} < T_5$, on passe à l'étape S24. La valeur de comptage du compteur COMP2 peut ainsi survivre à l'arrêt du véhicule ou à son endormissement. Le compteur COMP2 est également remis à zéro lorsque le système est activé en mode climatisation pendant une durée spécifique minimale.

A l'étape S24, on compare la valeur du compteur COMP2 à une valeur de comptage $C_2$ prédéterminée. La valeur de comptage $C_2$ correspond par exemple à une durée $D_2$ lorsque le compteur COMP2 est incrémenté tous les secondes. La durée $D_2$ est par exemple égale à 200 minutes. Si COMP2>$C_2$, on émet un ordre de dégivrage de l'accumulateur à l'étape S25. Sinon on poursuit le comptage.

L'opération de dégivrage est ensuite réalisée à l'étape S26 et, après l'étape S26, le compteur COMP2 est remis à zéro en retournant à l'étape S23.

Nous allons maintenant décrire l'opération de dégivrage de l'échangeur externe et de l'accumulateur (S16 ou S26) en référence à la figure 6. Ces deux opérations se distinguent essentiellement par les valeurs des paramètres de température, de comptage et de régime moteur utilisées car, dans les deux cas, du fluide comprimé circule dans l'échangeur externe et dans l'accumulateur pour effectuer le dégivrage.

L'opération de dégivrage commence avantageusement par une étape S100 d'autorisation de dégivrage. Suite à l'émission de l'ordre de dégivrage à l'étape S15, on n'autorise le dégivrage de l'échangeur externe et/ou de l'accumulateur que si certaines conditions sont vérifiées. Par exemple, dans l'exemple de la figure 6, le dégivrage n'est autorisée que si la vitesse du véhicule est inférieure ou égale à une valeur de vitesse $V_1$ prédéterminée. Avantageusement, la vitesse $V_1$ est égale à 0. Dans ce cas, l'opération de dégivrage n'est autorisé que si le véhicule est à l'arrêt. L'étape S100 est alors une étape de comparaison de la vitesse du véhicule avec la vitesse $V_1$. Si la vitesse du véhicule est supérieure à $V_1$, on interrompt le processus de dégivrage et on retourne à l'étape S12 ou S22, ce qui revient à attendre que la vitesse devienne inférieure ou égale à $V_1$ pour déclencher ou redéclencher l'opération de dégivrage. Si la vitesse du véhicule est déjà inférieure ou égale à $V_1$, l'opération de dégivrage de l'échangeur externe est autorisée. A noter que dans le cas de l'interruption du dégivrage, le compresseur et, le cas échéant le groupe moto ventilateur comme décrit plus loin dans la présente description, ne sont arrêtés que s'il n'y a pas d'autre besoin à satisfaire. Sinon, ils sont utilisés avec des régimes moteur éventuellement différents pour satisfaire cet autre besoin.

Selon un mode de réalisation plus perfectionné, une ou plusieurs conditions supplémentaires sont rajoutées pour autoriser l'opération de dégivrage. On rajoute par exemple au moins l'une des conditions suivantes :

- le véhicule doit être en procédure d'endormissement, c'est-à-dire que le les systèmes électroniques du véhicule sont en phase de mémorisation de leur état et d'arrêt de leurs processus; dans ce cas, la procédure d'endormissement est partiellement interrompue pour autoriser et lancer l'opération de dégivrage; le véhicule est maintenu éveillé durant une durée maximale spécifique pouvant être sensiblement supérieure à la durée correspondant à la valeur de comptage $C_3 + C_4$ au-delà de laquelle l'opération de dégivrage est arrêtée;

- il n'y a pas d'autre besoin d'utilisation de la boucle du système par exemple pour le confort habitacle, le maintien des modules de la batterie de traction du véhicule à une température adéquate pour optimiser sa durabilité ou éviter sa dégradation à trop forte ou trop faible température, pour le conditionnement habitacle (réchauffement ou rafraichissement de l'habitacle avant l'arrivée de l'utilisateur); en variante, l'opération de dégivrage est prioritaire par rapport à un ou plusieurs de ces besoins;

- il n'y a pas de défaillance au niveau de l'alimentation du compresseur ou du compresseur lui-même;

- l'utilisateur doit être supposé parti; dans ce cas, on détecte par exemple si le moteur de traction est arrêté ou si les portes sont fermées et condamnées par la clé;

- le moteur de traction du véhicule est arrêté; l'opération de dégivrage peut alors être autorisée même avant que le véhicule ne constate un départ supposé de l'utilisateur ou ne communique son proche endormissement;

- le véhicule doit être connecté à un réseau d'énergie externe; dans ce cas, l'énergie nécessaire pour l'opération de dégivrage est de préférence exclusivement fournie par le réseau d'énergie externe; ou

- le niveau de charge de la batterie du véhicule doit être supérieur à un seuil prédéfini;

Ensuite, à une étape S101, on met en marche le compresseur 10 à un régime moteur $R_2$ prédéterminé. La valeur $R_2$ est fonction de l'élément à dégivrer. Le régime moteur est avantageusement plus élevé pour le dégivrage de l'accumulateur que pour le dégivrage de l'échangeur externe. Pour l'échangeur externe, $R_2$ est par exemple égale à 5000 rpm et, pour l'accumulateur, $R_2$ est par exemple égale à 6000 rpm

Selon un mode de réalisation particulier, le régime moteur $R_2$ du compresseur est défini en fonction de la température extérieure $T_{ext}$. Plus la température extérieure est basse, plus le régime moteur $R_2$ est élevée.

Pendant cette étape, du fluide frigorigène comprimé circule à travers l'échangeur externe et l'accumulateur de manière à faire fondre le givre sur les parois externes de l'échangeur externe et au moins partiellement le givre sur les parois externes de l'accumulateur.

Pendant l'opération de dégivrage, un compteur COMP3 est incrémenté à une étape S102 tant que les conditions suivantes sont présentes :

- $T_{ext} \leq T_6$;

et

- $T_s \leq T_7$ ;

et

- COMP3 < $C_3$;

où

- COMP3 désigne la valeur de comptage du compteur COMP3;
- $T_6$ est une température prédéterminée positive proche de 0°C; elle est éventuellement fonction de l'ordre du besoin de dégivrage (dégivrage de l'échangeur ou dégivrage de l'accumulateur); $T_6$ est par exemple égale à 5°C pour les deux opérations de dégivrage si les régimes moteur $R_2$ sont différents;
- $T_7$ est une autre température positive prédéterminée qui est aussi éventuellement fonction de l'ordre de dégivrage, T7 est par exemple égale à 10°C pour les deux opérations de dégivrage si les régimes moteur $R_2$ sont différents; et
- $C_3$ est une valeur de comptage associée à la durée maximale de l'opération de dégivrage. C3 est par exemple une valeur de comptage correspondant à une durée $D_3$ de 6 minutes.

A cet effet, le procédé comporte une étape S103 de comparaison de la température extérieure $T_{ext}$ avec le seuil de température $T_6$ et une étape S104 de comparaison de la température $T_s$ avec le seuil de température $T_7$ et de comparaison de la valeur de comptage du compteur COMP3 avec la valeur de comptage $C_3$.

Si $T_{ext} > T_6$, alors on arrête l'opération de dégivrage en arrêtant le compresseur à une étape S105. Sinon, si $T_{ext} \leq T_6$, on passe à l'étape S104. Si $T_s \leq T_7$ et COMP3 < $C_3$, on revient à l'étape S100. Sinon, on passe à l'étape S106 dans laquelle on compare la température extérieure $T_{ext}$ à une température positive $T_8$.

Si $T_{ext} > T_8$, on passe à une seconde phase de l'opération de dégivrage, phase pendant laquelle on met en marche le groupe moto-ventilateur 17 situé à proximité de l'échangeur externe 14 pour évacuer par soufflage l'eau résiduelle présente sur les parois externes de l'échangeur externe et issue de la fonte du givre pendant la phase antérieure de l'opération de dégivrage.

Cette seconde phase de l'opération de dégivrage n'est intéressante que si la température extérieure $T_{ext}$ n'est pas fortement négative. C'est pourquoi cette seconde phase est précédée de l'étape S106 de comparaison de la température extérieure $T_{ext}$ avec la température $T_8$. $T_8$ est par exemple égale à -10°C. Si $T_{ext} \leq T_8$, le groupe moto-ventilateur n'est pas mis en marche car tout soufflage de l'air extérieur sur l'échangeur externe ferait regivrer en grande partie l'eau résiduelle présente sur les parois externes de l'échangeur. Il n'y a donc aucun bénéfice à exécuter cette seconde phase. Il est même préférable de l'éviter pour ne pas regivrer les parois de l'échangeur et ainsi éviter une consommation d'énergie inutile. Le compresseur est alors arrêté à l'étape S105. Si $T_{ext} > T_8$, on met en marche le groupe moto-ventilateur 17 à une étape S108.

Pendant cette phase de soufflage, le compresseur est de préférence mis en marche à un régime $R_3$ inférieure à $R_2$. $R_3$ est par exemple égal à 4000 rpm pour le dégivrage de l'échangeur et le dégivrage de l'accumulateur. Cette phase de soufflage est exécutée tant que la température $T_s$ est supérieure ou égale à une température positive $T_9$ et tant qu'une durée maximale D4 correspondant à une valeur de comptage $C_4$ n'est pas dépassée. En effet, lors du soufflage, la température du fluide traversant l'échangeur diminue et, si celle-ci s'approche d'une température proche de 0°C, il y a un risque de givrage de l'eau provenant de la fonte du givre initial. La température $T_9$ est par exemple égale à 2°C, et la durée D4 correspondant à $C_4$ est par exemple égale à 2 min. $T_9$ est avantageusement proche de 0°C. Cette phase comporte donc une étape S109 d'incrémentation d'un compteur COMP4, une étape S110 de comparaison de la température $T_s$ avec la valeur $T_9$ et de la valeur de comptage du compteur COMP4 avec la valeur de comptage $C_4$. L'étape S108 est avantageusement précédée d'une étape S107 d'autorisation de dégivrage identique à l'étape S100. Si le dégivrage n'est pas autorisé à cause d'une vitesse non nulle du véhicule ou d'un besoin prioritaire, par exemple un besoin pour le confort thermique, pour le pré-conditionnement habitacle ou le conditionnement batterie, on retourne à l'étape S12 ou S22. Dans ce cas, le compresseur et le groupe moto ventilateur ne sont arrêtés que s'il n'y a pas d'autre besoin à satisfaire. Sinon, ils sont utilisés avec des régimes moteur éventuellement différents pour satisfaire cet autre besoin.

La phase de soufflage est arrêtée lorsque la température $T_s$ est inférieure à $T_9$ ou lorsque la valeur de comptage du compteur COMP4 est supérieure ou égale à la valeur de comptage $C_4$. On arrête alors le compresseur et le groupe moto-ventilateur à une étape S111. Tant que l'une ou l'autre de ces deux conditions n'est pas remplie, on poursuit le soufflage et on incrémente le compteur COMP4.

Les compteurs COMP3 et COMP4 ne sont remis à zéro qu'après arrêt du compresseur et, le cas échéant, du groupe moto-ventilateur, à une étape S112. On retourne ensuite à l'étape S13 ou S23 de remise à zéro des compteurs COMP1 et COMP2

Selon un mode de réalisation plus général, le compresseur et, le cas échéant, le groupe moto-ventilateur ne sont plus utilisés pour le dégivrage dès qu'un besoin d'utilisation plus prioritaire du système survient.

En variante, le besoin de dégivrage est prioritaire par rapport à un ou plusieurs autres besoins.

Après remise à zéro des compteurs COMP1, COMP2, COMP3 et COMP4, on retourne au début du processus. Dans ce cas-là, et également dans le cas où le dégivrage n'est plus autorisé, la pompe à chaleur est mise dans le mode de fonctionnement demandé par le système. Si aucun mode n'est demandé, la pompe à chaleur se met au repos.

Bien que l'invention ait été décrite en liaison avec un mode de réalisation particulier, il est bien évident qu'elle n'y est nullement limitée et qu'elle comprend tous les équivalents techniques des moyens décrits ainsi que leurs combinaisons si celles-ci entrent dans le cadre de l'invention.

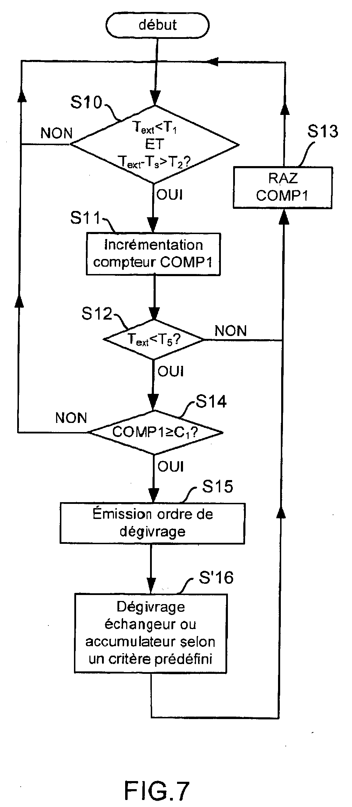

On peut par exemple, sur la base d'une détection de givrage de l'échangeur, émettre un ordre de givrage général, puis déclencher une opération de dégivrage de l'échangeur ou déclencher une opération de dégivrage de l'accumulateur selon un critère prédéfini. Ce mode de réalisation particulier est illustré par la figure 7. Le procédé comporte alors des étapes identiques aux étapes S10 à S14 de la figure 5. Les références S10 à S15 sont d'ailleurs reprises dans la figure 7. Pour l'étape S15, on considère toutefois que l'ordre de dégivrage émis est un ordre qui est valable à la fois pour déclencher une opération de dégivrage de l'échangeur externe et déclencher une opération de dégivrage de l'accumulateur. Ensuite, à une étape S'16, on déclenche une opération de dégivrage de l'échangeur externe ou une opération de dégivrage de l'accumulateur selon ledit critère prédéfini. Par exemple, on déclenche une fois sur n une opération de dégivrage de l'accumulateur, n étant un entier supérieur ou égal à 2, et, les fois restantes, on déclenche une opération de dégivrage de l'échangeur externe.

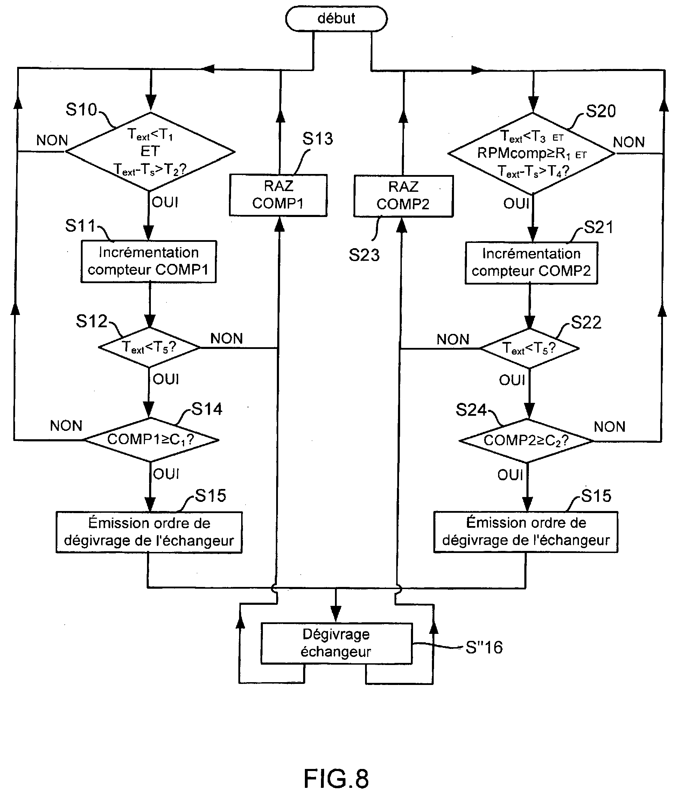

Selon une autre variante illustrée par la figure 8, on effectue à la fois la détection de givrage de l'échangeur (S10 à S15) et la détection de givrage de l'accumulateur (S20 à S25), comme précédemment décrit, tandis qu'à l'étape de dégivrage, référencée S"16, les paramètres de dégivrage de la boucle seront ceux du dégivrage de l'accumulateur si son givrage est détecté, sinon ceux du dégivrage de l'échangeur externe.

## Revendications

**1.** Procédé de commande d'un système de pompe à chaleur, notamment pour véhicule automobile, ledit système comprenant un compresseur (10) pour chauffer et comprimer un fluide frigorigène, un échangeur de chaleur interne (11) formant condenseur en mode chauffage pour chauffer un air intérieur par échange avec le fluide frigorigène issu du compresseur, un détendeur (13) pour refroidir le fluide frigorigène et un échangeur de chaleur externe (14) formant évaporateur en mode chauffage pour chauffer le liquide frigorigène issu du détendeur par échange avec un air extérieur, un accumulateur (15) étant en outre intercalé entre l'échangeur de chaleur externe et le compresseur pour stocker le fluide frigorigène avant compression, le procédé étant **caractérisé en ce qu'**il comporte les étapes suivantes:

    a) pendant le mode chauffage, détection (S10) du givrage de l'échangeur de chaleur externe,
    b) détermination (S11-S14) d'une donnée (COMP1) représentative de la durée du givrage de l'échangeur de chaleur,
    c) si la durée du givrage de l'échangeur de chaleur externe est supérieure ou égale à une première durée maximale prédéterminée ($C_1$), émission (S15) d'un ordre de dégivrage de l'échangeur, et
    d) si un ordre de dégivrage de l'échangeur est émis, déclenchement (S16;S'16;S"26) d'une opération de dégivrage de l'échangeur de chaleur externe et, selon un critère prédéfini, déclenchement d'une opération de dégivrage de l'accumulateur (S26;S'16;S"26) par circulation d'un fluide comprimé par le compresseur dans ledit échangeur externe et ledit accumulateur.

**2.** Procédé selon la revendication 1, **caractérisé en ce que** le critère prédéfini consiste à déclencher une fois sur n, n étant un entier supérieur ou égal à 2, une opération de dégivrage de l'accumulateur si un ordre de dégivrage de l'échangeur est émis et à déclencher les fois restantes une opération de dégivrage de l'échangeur de chaleur externe.

**3.** Procédé selon la revendication 1, **caractérisé en ce que**

    - l'étape a) comporte en outre une étape de détection (S20) du givrage de l'accumulateur,
    - l'étape b) comprend en outre une étape de détermination (S21-S24) d'une donnée représentative (COMP2) de la durée du givrage de l'accumulateur, et
    - l'étape c) comprend en outre l'émission (S25) d'un ordre de dégivrage de l'accumulateur si la durée du givrage de l'accumulateur de chaleur externe est supérieure ou égale à une deuxième durée maximale prédéterminée ($C_2$),

et **en ce que** le critère prédéfini consiste à déclencher une opération de dégivrage de l'accumulateur si un ordre de dégivrage de l'accumulateur est émis.

**4.** Procédé selon l'une quelconque des revendications 1 à 3, **caractérisé en ce que** l'opération de dégivrage (S16,S26;S'16;S"16) de l'échangeur externe ou de l'accumulateur comprend une étape de mise en marche du compresseur à un premier régime moteur

(R$_2$) prédéterminé pour faire circuler du fluide frigorigène chaud dans l'échangeur de chaleur externe et l'accumulateur pendant une durée inférieure ou égale à une troisième durée maximale prédéterminée (C$_3$), ledit régime moteur et ladite troisième durée maximale étant fonction de ladite opération de dégivrage.

5. Procédé selon la revendication 4, **caractérisé en ce que**, le système comprenant en outre un groupe moto-ventilateur (17) à proximité de l'échangeur de chaleur externe, l'opération de dégivrage (S16, S26;S'16;S''16) de l'échangeur externe ou de l'accumulateur comprend en outre, si la température de l'air extérieur (T$_{ext}$) est supérieure à une première valeur de température (T$_8$) prédéterminée, une étape (S108) de mise en marche du groupe moto-ventilateur pendant une durée inférieure ou égale à une quatrième durée maximale (C$_4$) afin de produire un flux d'air destiné à évacuer l'eau présente sur les parois externes dudit échangeur de chaleur externe après la fonte du givre.

6. Procédé selon l'une quelconque des revendications précédentes, **caractérisé en ce que**, pendant l'étape a), un givrage de l'échangeur de chaleur externe est détecté lorsque la température de l'air extérieur (T$_{ext}$) est inférieure à une deuxième valeur de température (T$_1$) prédéterminée et la différence de température (T$_{ext}$-T$_s$) entre la température de l'air extérieur et la température du fluide frigorigène à la sortie de l'échangeur de chaleur externe est supérieure à une troisième valeur de température (T$_2$) prédéterminée.

7. Procédé selon la revendication 6, **caractérisé en ce que** ladite troisième valeur de température (T$_2$) est fonction de la température de l'air extérieur (T$_{ext}$).

8. Procédé selon la revendication 3, **caractérisé en ce que**, pendant l'étape a), le givrage de l'accumulateur est détecté lorsque le régime moteur du compresseur (RPM$_{comp}$) est supérieur à une deuxième valeur de régime moteur (R$_1$) prédéterminée, la température de l'air extérieur (T$_{ext}$) est inférieure à une quatrième valeur de température (T$_3$) prédéterminée et la différence de température (T$_{ext}$-T$_s$) entre la température de l'air extérieur et la température du fluide frigorigène à la sortie de l'échangeur de chaleur externe est supérieure à une cinquième valeur de température (T$_4$) prédéterminée.

9. Procédé selon la revendication 8, **caractérisé en ce que** ladite cinquième valeur de température (T$_4$) est fonction de la température de l'air extérieur.

10. Procédé selon la revendication 3, **caractérisé en ce que**, pendant l'étape b), on incrémente un premier compteur (COMP1) lorsque le givrage de l'échangeur de chaleur externe est détecté et on incrémente un deuxième compteur (COMP2) lorsque le givrage de l'accumulateur est détecté.

11. Procédé selon la revendication 10, **caractérisé en ce que** lesdits premier et deuxième compteurs (COMP1, COMP2) sont remis à zéro lorsque la température de l'air extérieur (T$_{ext}$) est supérieure ou égale à une sixième valeur de température positive (T$_5$) prédéterminée.

12. Procédé selon la revendication 10 ou 11, **caractérisé en ce que**, pendant l'étape c), on émet un ordre de dégivrage de l'échangeur externe lorsque la valeur de comptage du premier compteur (COMP1) est supérieure ou égale à une première valeur de comptage (C$_1$) représentative de ladite première durée maximale et un ordre de dégivrage de l'accumulateur lorsque la valeur de comptage du deuxième compteur (COMP2) est supérieure ou égale à une deuxième valeur de comptage (C$_2$) représentative de ladite deuxième durée maximale.

13. Procédé selon l'une quelconque des revendications précédentes, **caractérisé en ce qu'**une opération de dégivrage de l'échangeur externe ou de l'accumulateur n'est lancée que si la vitesse du véhicule est inférieure ou égale à une valeur de vitesse (V$_1$) prédéterminée inférieure à 30 km/h

14. Procédé selon l'une quelconque des revendications 4 à 13, **caractérisé en ce que** ladite étape de mise en marche du compresseur à un premier régime moteur (R$_2$) pendant une durée inférieure ou égale à une troisième durée maximale (C$_3$) comprend les étapes suivantes :

   - mise en marche (S101) du compresseur audit premier régime moteur (R$_2$),
   - incrémentation (S102-S104) d'un troisième compteur (COMP3) tant que la température du fluide frigorigène à la sortie de l'échangeur de chaleur externe (T$_s$) est inférieure ou égale à une septième valeur prédéterminée de température (T$_7$) et que la valeur de comptage du troisième compteur (COMP3) est inférieure à une troisième valeur prédéterminée de comptage (C$_3$) représentative d'une cinquième durée maximale inférieure à ladite troisième durée maximale (C$_3$) et tant que la température extérieure est inférieure ou égale à une huitième température prédéterminée(T$_6$); et
   - arrêt (S105) dudit compresseur lorsque l'incrémentation du troisième compteur (COMP3) est arrêtée.

15. Procédé selon la revendication 14, **caractérisé en**

**ce que** l'étape de mise en marche du groupe moto-ventilateur pendant une durée inférieure ou égale à une quatrième durée maximale (C$_4$) comprend les étapes suivantes:

- mise en marche (S106,S108) du groupe moto-ventilateur et lorsque la température de l'air extérieur (T$_{ext}$) est supérieure ou égale à ladite première valeur de température (T$_8$) prédéterminée,
- incrémentation (S109,S110) d'un quatrième compteur (COMP4) tant que la température du fluide à la sortie de l'échangeur de chaleur externe (T$_s$) est supérieure ou égale à une neuvième valeur de température (T$_9$) prédéterminée et que la valeur de comptage du quatrième compteur (COMP4) est inférieure à une quatrième valeur prédéterminée de comptage (C$_4$) représentative de ladite quatrième durée maximale, et
- arrêt (S111) du groupe moto-ventilateur lorsque l'incrémentation du quatrième compteur (COMP4) est arrêtée.

16. Procédé selon la revendication 15, **caractérisé en ce que** le compresseur est mis en marche pendant la mise en marche du groupe-moto-ventilateur.

17. Procédé selon la revendication 16, **caractérisé en ce que**, pendant l'incrémentation du quatrième compteur, le compresseur fonctionne à un troisième régime (R$_3$) inférieur ou égal audit premier régime moteur (R$_2$).

18. Procédé selon la revendication 10 ou 11, **caractérisé en ce que** le pas d'incrémentation ou la vitesse d'incrémentation des premier et/ou deuxième compteurs (COMP1,COMP2) est fonction de la température extérieure (T$_{ext}$)

19. Procédé selon la revendication 10 ou 11, **caractérisé en ce que** le pas d'incrémentation ou la vitesse d'incrémentation des premier et/ou deuxième compteurs (COMP1,COMP2) est fonction de la différence de température (T$_{ext}$-T$_s$) entre la température de l'air extérieur et la température du fluide frigorigène à la sortie de l'échangeur de chaleur externe.

**Patentansprüche**

1. Verfahren zum Steuern eines Wärmepumpensystems, insbesondere für ein Kraftfahrzeug, wobei das System einen Kompressor (10), um ein Kühlfluid zu erwärmen und zu komprimieren, einen internen Wärmetauscher (11), welcher einen Kondensator im Heizmodus bildet, um eine Innenluft durch Austausch mit dem vom Kompressor stammenden Kühlfluid zu erwärmen, einen Druckminderer (13), um das Kühlfluid abzukühlen und einen externen Wärmetauscher (14), welcher einen Verdampfer im Heizmodus bildet, um das vom Kompressor stammende Kühlfluid durch Austausch mit einer Außenluft aufzuwärmen, wobei ein Speicher (15) außerdem zwischen dem externen Wärmetauscher und dem Kompressor eingefügt ist, um das Kühlfluid vor der Verdichtung zu speichern, wobei das Verfahren **dadurch gekennzeichnet ist, dass** es die folgenden Schritte aufweist:

a) Erfassen (S10) der Vereisung des externen Wärmetauschers während des Heizmodus,
b) Festlegen (S11-S14) eines Wertes (COMP1), welcher für die Dauer der Vereisung des Wärmetauschers repräsentativ ist,
c) falls die Dauer der Vereisung des externen Wärmetauschers größer oder gleich einer ersten maximalen vorgegebenen Dauer (C$_1$) ist, Ausgeben (S15) eines Befehls zur Enteisung des Tauschers, und
d) falls ein Befehl zur Enteisung des Tauschers ausgegeben ist, Auslösen (S16;S'16;S"26) eines Arbeitsschrittes zur Enteisung des externen Wärmetauschers und Auslösen eines Arbeitsschrittes zur Enteisung des Speichers (S26;S'16;S"26) durch Zirkulation eines durch den Kompressor verdichteten Fluids in dem externen Tauscher und dem Speicher gemäß einem vordefinierten Kriterium.

2. Verfahren nach Anspruch 1, **dadurch gekennzeichnet, dass** das vordefinierte Kriterium darin besteht, jedes n-te Mal, wobei n eine ganze Zahl größer oder gleich 2 ist, einen Arbeitsschritt zur Enteisung des Speichers auszulösen, falls ein Befehl zur Enteisung des Tauscher ausgegeben wird und bei den verbleibenden Malen einen Arbeitsschritt zur Enteisung des externen Wärmetauschers auszulösen.

3. Verfahren nach Anspruch 1, **dadurch gekennzeichnet, dass**

- der Schritt a) außerdem einen Schritt zum Erfassen (S20) der Vereisung des Speichers aufweist,
- der Schritt b) außerdem einen Schritt zum Festlegen (S21-S24) eines Wertes (COMP2) aufweist, welcher der Dauer der Vereisung des Speichers entspricht, und
- der Schritt c) außerdem die Ausgabe (S25) eines Befehls zur Enteisung des Speichers aufweist, wenn die Dauer der Vereisung des externen Wärmespeichers größer oder gleich einer maximalen vorgegebenen Dauer (C$_2$) ist, und dass das vordefinierte Kriterium darin besteht, einen Arbeitsschritt zum Enteisen des Speichers auszulösen, falls ein Befehl zum Enteisen des Speichers ausgegeben wird.

4. Verfahren nach einem der Ansprüche 1 bis 3, **dadurch gekennzeichnet, dass** der Arbeitsschritt zum Enteisen (S16,S26;S'16;S"16) des externen Tauschers oder des Speichers einen Schritt der Inbetriebnahme des Kompressors mit einer ersten vorgegebenen Motordrehzahl ($R_2$) aufweist, um Kühlfluid in dem externen Wärmetauscher und dem Speicher während einer Dauer zirkulieren zu lassen, welche kleiner oder gleich einer dritten maximalen vorgegebenen Dauer ($C_3$) ist, wobei die Motordrehzahl und die dritte maximale Dauer eine Funktion des Arbeitsschritts zur Enteisung sind.

5. Verfahren nach Anspruch 4, **dadurch gekennzeichnet, dass** das System außerdem eine Motor-Gebläse-Einheit (17) in der Nähe des externen Wärmetauschers aufweist, wobei der Arbeitsschritt zur Enteisung (S16,S26;S'16;S"16) des externen Tauschers oder des Speichers außerdem einen Schritt (S108) zur Inbetriebnahme der Motor-Gebläse-Einheit während einer Dauer, welche kleiner oder gleich einer vierten maximalen Dauer ($C_4$) ist, aufweist, um einen Luftstrom zu erzeugen, welcher dafür vorgesehen ist, um das an den äußeren Wänden des externen Wärmetauschers nach dem Schmelzen der Vereisung vorhandene Wasser zu entfernen, falls die Temperatur der Außenluft ($T_{ext}$) größer als ein erster vorgegebener Temperaturwert ($T_8$) ist.

6. Verfahren nach einem der vorhergehenden Ansprüche, **dadurch gekennzeichnet, dass** während des Schrittes a) eine Vereisung des externen Wärmetauschers erfasst wird, wenn die Temperatur der Außenluft ($T_{ext}$) kleiner als ein zweiter vorgegebener Temperaturwert ($T_1$) ist und die Temperaturdifferenz ($T_{ext}-T_s$) zwischen der Temperatur der Außenluft und der Temperatur des Kühlfluids am Ausgang des externen Wärmetauschers größer als ein dritter vorgegebener Temperaturwert ($T_2$) ist.

7. Verfahren nach Anspruch 6, **dadurch gekennzeichnet, dass** der dritte Temperaturwert ($T_2$) eine Funktion der Temperatur der Außenluft ($T_{ext}$) ist.

8. Verfahren nach Anspruch 3, **dadurch gekennzeichnet, dass** während des Schrittes a) die Vereisung des Speichers erfasst wird, wenn die Motordrehzahl des Kompressors ($RPM_{comp}$) größer als ein zweiter vorgegebener Wert der Motordrehzahl ($R_1$) ist, die Temperatur der Außenluft ($T_{ext}$) kleiner als ein vierter vorgegebener Temperaturwert ($T_3$) ist und die Temperaturdifferenz ($T_{ext}-T_s$) zwischen der Temperatur der Außenluft und der Temperatur des Kühlfluids am Ausgang des externen Wärmetauschers größer als ein fünfter vorgegebener Temperaturwert ($T_4$) ist.

9. Verfahren nach Anspruch 8, **dadurch gekennzeichnet, dass** der fünfte Temperaturwert ($T_4$) eine Funktion der Temperatur der Außenluft ist.

10. Verfahren nach Anspruch 3, **dadurch gekennzeichnet, dass** während des Schrittes b) ein erster Zähler (COMP1) inkrementiert wird, wenn die Vereisung des externen Wärmetauschers erfasst wird und ein zweiter Zähler (COMP2) inkrementiert wird, wenn die Vereisung des Speichers erfasst wird.

11. Verfahren nach Anspruch 10, **dadurch gekennzeichnet, dass** der erste und zweite Zähler (COMP1, COMP2) auf null gesetzt werden, wenn die Temperatur der Außenluft ($T_{ext}$) größer oder gleich einem sechsten positiven vorgegebenen Temperaturwert ($T_5$) ist.

12. Verfahren nach Anspruch 10 oder 11, **dadurch gekennzeichnet, dass** während des Schrittes c) ein Befehl zur Enteisung des externen Tauschers ausgegeben wird, wenn der Zählwert des ersten Zählers (COMP1) größer oder gleich einem ersten Zählwert ist ($C_1$), welcher für die erste maximale Dauer repräsentativ ist, und ein Befehl zur Enteisung des Speichers ausgegeben wird, wenn der Zählwert des zweiten Speichers (COMP2) größer oder gleich einem zweiten Zählwert ($C_2$) ist, welcher für die zweite maximale Dauer repräsentativ ist.

13. Verfahren nach einem der vorhergehenden Ansprüche, **dadurch gekennzeichnet, dass** ein Arbeitsschritt zur Enteisung des externen Tauschers oder des Speichers nur gestartet wird, wenn die Geschwindigkeit des Fahrzeugs kleiner oder gleich einem vorgegebenen Geschwindigkeitswert ($V_1$) ist, welcher kleiner als 30 km/h ist.

14. Verfahren nach einem der Ansprüche 4 bis 13, **dadurch gekennzeichnet, dass** der Schritt zur Inbetriebnahme des Kompressors mit einer ersten Motordrehzahl ($R_2$) während einer Dauer kleiner oder gleich einer dritten maximalen Dauer ($C_3$) die folgenden Schritte aufweist:

   - Inbetriebnahme (S101) des Kompressors mit der ersten Motordrehzahl ($R_2$),
   - Inkrementieren (S102-S104) eines dritten Zählers (COMP3) solange die Temperatur des Kühlfluids am Ausgang des externen Wärmetauschers ($T_s$) kleiner oder gleich einem siebten vorgegebenen Temperaturwert ($T_7$) ist und solange der Zählwert des dritten Zählers (COMP3) kleiner als ein dritter vorgegebener Zählwert ($C_3$) ist, welcher für eine fünfte maximale Dauer repräsentativ ist, welche kleiner als die dritte ma-

ximale Dauer ($C_3$) ist, und solange die Außentemperatur kleiner oder gleich einer achten vorgegebenen Temperatur ($T_6$) ist; und
- Anhalten (S105) des Kompressors, wenn das Inkrementieren des dritten Zählers (COMP3) angehalten wird.

15. Verfahren nach Anspruch 14, **dadurch gekennzeichnet, dass** der Schritt zur Inbetriebnahme der Motor-Gebläse-Einheit während einer Dauer kleiner oder gleich einer vierten maximalen Dauer ($C_4$) die folgenden Schritte aufweist:

- Inbetriebnahme (S106, S108) der Motor-Gebläse-Einheit, und wenn die Temperatur der Außenluft ($T_{ext}$) größer oder gleich dem ersten vorgegebenen Temperaturwert ($T_8$) ist,
- Inkrementieren (S109, S110) eines vierten Zählers (COMP4) solange die Temperatur des Kühlfluids am Ausgang des externen Wärmetauschers ($T_s$) kleiner oder gleich einem neunten vorgegebenen Temperaturwert ($T_9$) ist und solange der Zählwert des vierten Zählers (COMP4) kleiner als ein vierter vorgegebener Zählwert ($C_4$) ist, welcher für die vierte maximale Dauer repräsentativ ist, und
- Anhalten (S111) der Motor-Gebläse-Einheit, wenn das Inkrementieren des vierten Zählers (COMP4) angehalten wird.

16. Verfahren nach Anspruch 15, **dadurch gekennzeichnet, dass** der Kompressor während der Inbetriebnahme der Motor-Gebläse-Einheit in Betrieb genommen wird.

17. Verfahren nach Anspruch 16, **dadurch gekennzeichnet, dass** während des Inkrementierens des vierten Zählers der Kompressor mit einer dritten Drehzahl ($R_3$) arbeitet, welche kleiner oder gleich der ersten Drehzahl ($R_2$) ist.

18. Verfahren nach Anspruch 10 oder 11, **dadurch gekennzeichnet, dass** der Schritt des Inkrementierens oder die Geschwindigkeit des Inkrementierens des ersten und/oder zweiten Zählers (COMP1, COMP2) eine Funktion der Außentemperatur ($T_{ext}$) ist.

19. Verfahren nach Anspruch 10 oder 11, **dadurch gekennzeichnet, dass** der Schritt des Inkrementierens oder die Geschwindigkeit des Inkrementierens des ersten und/oder zweiten Zählers (COMP1, COMP2) eine Funktion der Temperaturdifferenz ($T_{ext}$-$T_s$) zwischen der Temperatur der Außenluft und der Temperatur des Kühlfluids am Ausgang des externen Wärmetauschers ist.

**Claims**

1. Control method for a heat pump system, notably for a motor vehicle, said system comprising a compressor (10) for heating and compressing a refrigerant fluid, an internal heat exchanger (11) forming a condenser in heating mode for heating internal air by exchange with the refrigerant fluid flowing from the compressor, an expansion valve (13) for cooling the refrigerant fluid and an external heat exchanger (14) forming an evaporator in heating mode for heating the refrigerant liquid flowing from the expansion valve by exchange with external air, an accumulator (15) also being interposed between the external heat exchanger and the compressor for storing the refrigerant fluid before compression, the method being **characterized in that** it comprises the following steps:

a) in heating mode, detecting (S10) the frosting of the external heat exchanger,
b) determining (S11-S14) a data element (COMP1) representing the duration of the frosting of the heat exchanger,
c) if the duration of the frosting of the external heat exchanger is greater than or equal to a first predetermined maximum duration ($C_1$), sending a command (S15) for defrosting the exchanger, and
d) if a command for defrosting the exchanger is sent, starting (S16; S'16; S"26) an operation of defrosting the external heat exchanger and, according to a predefined principle, starting an operation of defrosting the accumulator (S26; S'16; S"26) by circulating a fluid compressed by the compressor in said external exchanger and said accumulator.

2. Method according to Claim 1, **characterized in that** the predefined principle is that an operation of defrosting the accumulator is started on one of every n occasions, where n is an integer greater than or equal to 2, if a command for defrosting the exchanger is sent, and that an operation of defrosting the external heat exchanger is started on the other occasions.

3. Method according to Claim 1, **characterized in that**:

- step a) further includes a step (S20) of detecting the frosting of the accumulator,
- step b) further comprises a step (S21-S24) of determining a data element (COMP2) representing the duration of the frosting of the accumulator, and
- step c) further comprises the sending (S25) of a command for defrosting the accumulator if the duration of the frosting of the accumulator greater than or equal to a second predetermined maximum duration ($C_2$), and **in that** the predefined principle is that an operation of defrosting the accumulator is started if a command for defrosting the accumulator is sent.

4. Method according to any of Claims 1 to 3, **characterized in that** the operation of defrosting (S16, S26; S'16; S"16) the external exchanger or the accumulator comprises a step of putting the compressor into operation at a first predetermined motor speed ($R_2$), in order to cause hot refrigerant fluid to flow in the external heat exchanger and the accumulator for a duration which is less than or equal to a third predetermined maximum duration ($C_3$), said motor speed and said third maximum duration being a function of said defrosting operation.

5. Method according to Claim 4, **characterized in that**, the system further comprising a motorized fan unit (17) near the external heat exchanger, the operation of defrosting (S16, S26; S'16; S"16) the external exchanger or the accumulator further comprises, if the external air temperature ($T_{ext}$) is above a first predetermined temperature value ($T_8$), a step (S108) of putting the motorized fan unit into operation for a duration less than or equal to a fourth maximum duration ($C_4$) in order to produce an air flow to remove the water remaining on the outer walls of said external heat exchanger after the melting of the frost.

6. Method according to any of the preceding claims, **characterized in that**, in step a), frosting of the external heat exchanger is detected if the external air temperature ($T_{ext}$) is below a second predetermined temperature value ($T_1$) and the temperature difference ($T_{ext}$-$T_s$) between the external air temperature and the temperature of the refrigerant fluid at the outlet of the external heat exchanger is above a third predetermined temperature value ($T_2$).

7. Method according to Claim 6, **characterized in that** said third temperature value ($T_2$) is a function of the external air temperature ($T_{ext}$).

8. Method according to Claim 3, **characterized in that**, in step a), the frosting of the accumulator is detected if the motor speed of the compressor ($RPM_{comp}$) is above a second predetermined value of motor speed ($R_1$), the external air temperature ($T_{ext}$) is below a fourth predetermined temperature value ($T_3$), and the temperature difference ($T_{ext}$-$T_s$) between the external air temperature and the temperature of the refrigerant fluid at the outlet of the external heat exchanger is above a fifth predetermined temperature value ($T_4$).

9. Method according to Claim 8, **characterized in that** said fifth temperature value ($T_4$) is a function of the external air temperature.

10. Method according to Claim 3, **characterized in that**, in step b), a first counter (COMP1) is incremented if the frosting of the external heat exchanger is detected, and a second counter (COMP2) is incremented if the frosting of the accumulator is detected.

11. Method according to Claim 10, **characterized in that** said first and second counters (COMP1, COMP2) are reset to zero if the external air temperature ($T_{ext}$) is higher than or equal to a sixth predetermined positive temperature value ($T_5$).

12. Method according to Claim 10 or 11, **characterized in that**, in step c), a command for defrosting the external exchanger is sent if the count value of the first counter (COMP1) is greater than or equal to a first count value ($C_1$) representing said first maximum duration, and a command for defrosting the accumulator is sent if the count value of the second counter (COMP2) is greater than or equal to a second count value ($C_2$) representing said second maximum duration.

13. Method according to any of the preceding claims, **characterized in that** an operation of defrosting the external exchanger or the accumulator is started only if the speed of the vehicle is less than or equal to a predetermined value of speed ($V_1$) of 30 km/h or below.

14. Method according to any of Claims 4 to 13, **characterized in that** said step of putting the compressor into operation at a first motor speed ($R_2$) for a duration which is less than or equal to a third maximum duration ($C_3$) comprises the following steps:

 - putting the compressor into operation (S101) at said first motor speed ($R_2$),
 - incrementing (S102-S104) a third counter (COMP3), as long as the temperature of the refrigerant fluid at the outlet of the external heat exchanger ($T_s$) is less than or equal to a seventh predetermined temperature value ($T_7$) and as long as the count value of the third counter (COMP3) is less than a third predetermined count value ($C_3$) representing a fifth maximum duration which is less than said third maximum duration ($C_3$), and as long as the external temperature is less than or equal to an eighth predetermined temperature ($T_6$); and
 - stopping (S105) said compressor if the incrementing of the third counter (COMP3) is stopped.

15. Method according to Claim 14, **characterized in**

**that** the step of putting the motorized fan unit into operation for a duration which is less than or equal to a fourth maximum duration ($C_4$) comprises the following steps:

- putting the motorized fan unit into operation (S106, S108) if the external air temperature appearance ($T_{ext}$) is greater than or equal to said first predetermined temperature value ($T_8$),
- incrementing (S109, S110) a fourth counter (COMP4), as long as the temperature of the fluid at the outlet of the external heat exchanger ($T_s$) is greater than or equal to a ninth predetermined temperature value ($T_9$) and as long as the count value of the fourth counter (COMP4) is less than a fourth predetermined count value ($C_4$) representing said fourth maximum duration, and
- stopping (S111) the motorized fan unit if the incrementing of the fourth counter (COMP4) is stopped.

16. Method according to Claim 15, **characterized in that** the compressor is put into operation while the motorized fan unit is put into operation.

17. Method according to Claim 16, **characterized in that**, during the incrementing of the fourth counter, the compressor operates at a third motor speed ($R_3$) which is less than or equal to said first motor speed ($R_2$).

18. Method according to Claim 10 or 11, **characterized in that** the incrementation interval, or the incrementation speed, of the first and/or second counters (COMP1, COMP2) is a function of the external temperature ($T_{ext}$).

19. Method according to Claim 10 or 11, **characterized in that** the incrementation interval, or the incrementation speed, of the first and/or second counters (COMP1, COMP2) is a function of the temperature ($T_{ext}$-$T_s$) between the external air temperature and the temperature of the refrigerant fluid at the outlet of the external heat exchanger.

FIG.1

FIG.2

FIG.3

EP 2 822 788 B1

FIG.4

FIG.5

Étape S15 ou S25

S100 — Vitesse ≤ $V_1$ ? → NON → vers S12 ou S22

S16 ou S26

OUI

Mise en marche compresseur à un régime $R_2$ — S101

Incrémentation COMP3 — S102

S103 — $T_{ext} \leq T_6$ ? → NON

OUI

S104 — $T_S > T_7$ ou COMP3 ≥ $C_3$ ? — NON

OUI

S106 — $T_{ext} > T_8$ ? → NON

OUI

S107 — Vitesse ≤ $V_1$ ? → NON → Vers S12 ou S22

OUI

Mise en marche du groupe moto ventilateur — S108

Incrémentation compteur COMP4 — S109

S110 — $T_S < T_9$ ou COMP4 ≥ $C_4$ ? — NON

OUI

Arrêt du compresseur — S105

Arrêt du compresseur et arrêt du groupe moto-ventilateur — S111

RAZ COMP3 et COMP4 — S112

Vers début

FIG.6

FIG.7

FIG.8

**EP 2 822 788 B1**

**RÉFÉRENCES CITÉES DANS LA DESCRIPTION**

**Documents brevets cités dans la description**

- JP 10166846 A